# EUROPÄISCHE PATENTSCHRIFT

(11) **EP 4 025 659 B1**
(45) Veröffentlichungstag und Bekanntmachung des Hinweises auf die Patenterteilung: **27.11.2024**
(21) Anmeldenummer: 20764685.2
(22) Anmeldetag: 04.09.2020
(51) Int. Cl.: C09D 7/00

(54) **BESCHICHTUNGSZUSAMMENSETZUNG**
COATING COMPOSITION
COMPOSITION DE REVÊTEMENT

(30) Priorität: 04.09.2019 EP 19195358
(43) Veröffentlichungstag der Anmeldung: 13.07.2022
(73) Patentinhaber: Steuler Korrosionsschutz Holding GmbH, 56427 Siershahn (DE)
(72) Erfinder: DUTSCHKE, Christian, 56235 Hundsdorf (DE); MARCKS, Ralf, 53639 Königswinter (DE); ZWICK, Iris, 56598 Rheinbrohl (DE)
(74) Vertreter: dompatent von Kreisler Selting Werner - Partnerschaft von Patent- und Rechtsanwälten mbB
(86) Internationale Anmeldenummer: PCT/EP2020/074843
(87) Internationale Veröffentlichungsnummer: WO 2021/044019

(56) Entgegenhaltungen:
- WO-A1-2012/110802
- US-A1- 2005 080 202

## Beschreibung

Die vorliegende Erfindung betrifft eine Bindemittelzusammensetzung.

In vielen technischen Bereichen werden unterschiedlichste Reaktionsharzsysteme verwendet, um die für den jeweiligen Einsatz gewünschten Eigenschaften zu erreichen.

Ein Einsatzgebiet solcher Reaktionsharzsysteme ist die Beschichtung von Oberflächen gegenüber Lösungsmitteln und oxidierend wirkenden Chemikalien. Solche Beschichtungssysteme werden beispielsweise in der chemischen Industrie, in der Erdölverarbeitung, in Raffinerien, in der Abwasserbehandlung, in Erzaufbereitungsanlagen, im Gewässerschutz, in chemischen Speichern, Reaktoren, Leitungen, Auffangwannen und -gruben, Kanälen etc. eingesetzt.

Typische Systeme sind: Asplit VEL, Asplit LF, Asplit LC, alle erhältlich von REMA TipTop, Ceilcote Lining 74, Ceilcote Flakeline 232 (222, 282), alle erhältlich von International Paint, Chemflake Special, erhältlich von Jotun, Bücolit V47-36, erhältlich von GBT-Bücolit und viele weitere. Dabei handelt es sich um Systeme, die aus gesundheitlich bedenklichen Stoffen erzeugt werden.

Typisch sind Vinylester reaktivverdünnt mit Monostyrol, sowie der Einsatz von Furfurylalkohol, Furfural, Formaldehyd oder Phenol.

Dies führt dazu, dass beim Aufbringen der Beschichtung durch verdampfende Produkte zum Teil Explosionsrisiken bestehen und zum anderen für die Mitarbeiter häufig Atemschutzgeräte vorgeschrieben sind, um Sicherheits- und Arbeitsschutzanforderungen Rechnung zu tragen.

Obwohl es eine Vielzahl von geeigneten Reaktivsystemen gibt, besteht daher weiterhin Bedarf an Systemen, die hervorragende Eigenschaften mit geringeren Arbeitsschutzanforderungen kombinieren.

Wünschenswerte Anforderungen an entsprechende Beschichtungen sind:
- Verarbeitbarkeit im Bereich von 5 bis 40 °C
- einfache Verarbeitung durch übliche Arbeitsmittel
- keine Erforderlichkeit von Explosionsschutzmaßnahmen
- keine Erforderlichkeit von Atemschutzgeräten für die Mitarbeiter
- hohe Beständigkeit gegen organische Chemikalien, Laugen und Säuren
- Abriebfestigkeit
- gute Anhaftung
- Flexibilität.

US 2005/080202 A1 offenbart eine Familie multifunktionaler Acrylatoligomere, die als Pigmentmahlvehikel zur Verwendung in strahlungshärtbaren Beschichtungsformulierungen nützlich sind.

WO 2012/110802 A1 offenbart ein Tintenstrahlverfahren, in dem Acrylatpolymere eingesetzt werden.

Aufgabe der vorliegenden Erfindung war es, Bindemittelsysteme bereitzustellen, die zumindest einige der Anforderungen erfüllen.

Gelöst wird die Aufgabe durch eine Bindemittelzusammensetzung enthaltend
- 50 bis 70 Gew.-% eines Acrylatesters eines Epoxy-Novolac-Harzes
- 30 bis 49 Gew.-% mono-, di- oder trifunktionelle Acrylate
- 0,1 bis 2 Gew.-% Starter
- 0 bis 10 Gew.-% weitere Hilfsstoffe,
wobei die Bindemittelzusammensetzung im Wesentlichen keine Bestandteile aufweist, die einen Siedepunkt unter 200 °C bei Normaldruck haben.

Erfindungsgemäß enthält die Bindemittelzusammensetzung 50 bis 80 Gew.-% eines Acrylatesters eines Epoxy-Novolac-Harzes.

Falls solche Produkte in Mischungen geliefert werden, beziehen sich die Mengenangaben beziehen sich dann auf den Gehalt an Acrylatester des Epoxy-Novolac-Harzes ohne Berücksichtigung der anderen Stoffe in der Mischung.

Bevorzugte Mengen sind 60 bis 70 Gew.-% im Bindemittel.

Bevorzugt handelt es sich bei dem Acrylatester des Epoxy-Novolac-Harzes um einen Triacrylatester. Ein bevorzugtes Produkt ist Ebecryl^{®} 9138 erhältlich von Allnex Group.

Weiterhin enthält die Bindemittelzusammensetzung mono-, di- oder trifunktionelle Acrylate. Solche werden bevorzugt ausgewählt aus 1,4-Butandioldimethacrylat, 1,6-Hexandioldimethacrylat, Tripropylenglycoldiacrylat, Glyceroldimethacrylat, 1,4-Butandioldiacrylat, 1,6-Hexandioldiacrylat, Polyethylenglycol 200 dimethacrylat, Butyldiglycolmethacrylat, Dicylopentenyloxyethylmethacrylat, Dihydroxycyclopentadienylacrylat, Tetrahydrofurfurylmethacrylat, Ethyltriglycolmethacrylat, Trimethylolpropantrimethacrylat und Mischungen hiervon.

Auch hier gilt, dass, wenn diese in einer Mischung angeboten werden, für die Berechnung der Gewichtsanteile nur der Anteil an mono-, di- oder trifunktionellen Acrylaten berücksichtigt wird. Bevorzugte Mengenanteile liegen bei 30 bis 45 Gew.-%.

Das obengenannte Ebecryl^{®} 9138 ist eine Mischung von 80 Gew.-% eines Acrylatesters eines Epoxy-Novolac-Harzes und 20 Gew.-% 1,4-Butandioldiacrylat. Wird Ebecryl^{®} 9138 eingesetzt, wird bevorzugt noch weiteres mono-, di- oder trifunktionelles Acrylat zugesetzt.

Weiterhin enthält die Bindemittelzusammensetzung einen Starter. Als Starter haben sich beispielsweise azo- oder peroxidbasierte Starter als geeignet erwiesen, welche zu einer Polymerisationsreaktion im oben angegebenen Verarbeitungstemperaturbereich führen. Ziel ist es, eine Härtung bis zur Klebfreiheit der Oberfläche innerhalb von längstens 24 Stunden bei Verarbeitungszeiten von wenigstens 25 Minuten zu erreichen, entsprechend weiß der Fachmann die Beschleuniger- bzw. Verzögerermenge einzusetzen. Es wird bevorzugt, dass der Starter thermisch aktiviert wird; in diesen Fällen ist es sinnvoll, den Starter erst kurz von dem Einsatz mit den restlichen Komponenten zu kombinieren. Es ist aber grundsätzlich auch möglich, an Stelle von Startern eine Aktivierung durch UV-Strahlung oder Elektronenstrahl zu erreichen.

Die Zusammensetzung kann weiterhin Hilfsstoffe enthalten, z.B. Beschleuniger, Verzögerer, Viskositätsmodifikatoren, Haftverbesserer, etc.

Hilfsstoffe im Sinne dieser Anmeldung sind Inhaltsstoffe, die auf die Polymerisationsreaktion Einfluss nehmen.

Die erfindungsgemäße Bindemittelzusammensetzung wird üblicherweise zusammen mit Füllstoffen verwendet, es entsteht dann eine Beschichtungszusammensetzung. Füllstoffe sind inert bezüglich der Polymerisationsreaktion, können jedoch wichtige Einflüsse auf Eigenschaften der Zusammensetzung haben, insbesondere auf Schwindung, Dichtheit gegenüber Reagenzien, Härte, Verschleiß, Leitfähigkeit. Dabei kann es sich z.B. um Glasflakes, Glimmer, Bariumsulfat oder Quarzmehl handeln. Alternativ ist es möglich, die Oberfläche mit z.B. Glasfasergeweben, Glasfasermatten, Glasfaservliesen abzudecken und diese mit dem Bindemittel zu tränken. Statt Glasfasern können z.B. auch Kohlefasern eingesetzt werden. Weitere Füllstoffe sind z.B. Pigmente, Schwerspat, Quarze, Kieselsäuren, Kokse, Ruße, Graphit, Siliziumcarbid, Tonerde und Mischungen davon.Auch solche Beschichtungszusammensetzungen sind Gegenstand der Erfindung.

Wenn die Zuordnung eines Produktes zu den Hilfs- oder Füllstoffen - trotz der oben genannten Definition - schwierig erscheint, dann sind Stoffe, die nicht vollständig in der Bindemittelzusammensetzung gelöst werden können, Füllstoffe. Substanzen, die sich lösen, sind Hilfsstoffe.

Im Gegensatz zu vielen Produkten des Standes der Technik enthält das erfindungsgemäße Produkt praktisch kein Monostyrol. Der Gehalt an Monostyrol ist daher bevorzugt ≤0.05 Gew.-%, bevorzugt unterhalb der Messgrenze.

Die erfindungsgemäße Bindemittelzusammensetzung weist im Wesentlichen keine Bestandteile auf, die einen Siedepunkt unter 200 °C bei Normaldruck haben. "Im Wesentlichen" bedeutet, dass der Anteil an Inhaltsstoffen mit einem Siedepunkt unter 200 °C bei Normaldruck <1 Gew.-% bezogen auf die gesamte Bindemittelzusammensetzung ist, bevorzugt <0,5 Gew.-%. Normaldruck entspricht 1.013 mbar.

Gegenstand der Erfindung ist auch ein Formkörper, der durch Aushärtung der erfindungsgemäßen Bindemittelzusammensetzung oder Beschichtungszusammensetzung erhältlich ist. Solche Formkörper können Bauteile oder Beschichtungen sein.

Gegenstand der Erfindung ist auch die Verwendung der erfindungsgemäßen Bindemittelzusammensetzung oder Beschichtungszusammensetzung als Schutzschicht auf Substraten wie Stahlbeton oder Stahl, als Verlaufs-, Spachtel- oder Einstreubeschichtung, als Kunstharzkitt zum Verlegen und Verfugen von Plattierungen oder Ausmauerungen, als Behälterinnenbeschichtungen oder als Kunstharzmassen zur Herstellung von Polybetonen.

Ein weiterer Gegenstand der Erfindung ist ein Verfahren zur Beschichtung eines Substrats umfassend die Schritte
- Aufbringen der erfindungsgemäßen Bindemittelzusammensetzung oder Beschichtungszusammensetzung, um eine Beschichtungsschicht zu erhalten
- Aushärten der Beschichtungsschicht.

Dabei kann das Aufbringen beispielsweise durch Laminier-, Tauch-, Tränk-, Spachtel-, Spritz- oder Rollverfahren erfolgen.

Die erfindungsgemäße Bindemittelzusammensetzung oder Beschichtungszusammensetzung wird typischerweise erst kurz vor dem Einsatz angemischt. In einer einfachen Variante sind die Acrylatester eines Epoxy-Novolac-Harzes, die mono-, di- oder trifunktionellen Acrylate, Hilfs- und Füllstoffe vorgemischt; es wird nur der Starter hinzugegeben und gemischt. Es können aber auch drei oder vier Komponenten vor Ort gemischt werden.

Bevorzugt ist zum Aushärten Bestrahlung und zwar insbesondere Bestrahlung mit UV-Licht nicht notwendig. Somit können Beschichtungen auf Basis des erfindungsgemäßen Bindemittels in ökonomischer und praktikabler Weise großflächig ohne aufwändige zusätzliche Härtungsmaßnahmen bei Raumtemperatur vollständig aushärten.

Die Erfindung wird durch die weiteren, nachfolgenden Beispiele näher erläutert:

### Beispiel 1

66,27 kg Ebecryl 9138 enthaltend 80 Gew. % Acrylatester eines Epoxynovolac-Harzes und 20 Gew. % 1,4-Butandioldiacrylat wurden mit 22,22 kg 1,4-BDDMA enthaltend 90 Gew. % Butandioldimethacrylat sowie 11,11 kg Dicyclopentenyloxyethylmethacrylat (FA-512 M, Hitachi Chemicals) vermischt.

Als Hilfsstoffe wurden am Einsatzort zu 10 kg der o.g. Mischung 20 g Beschleuniger, Accelerator NL-53 (Akzo) enthaltend 60-70 Gew. % Cobalt II-2-ethylhexanoat zugegeben und verrührt. Dann erfolgte die Zugabe von 200 g peroxidbasiertem Starter Peroxan CU-80-L (Pergan) enhaltend 80-85 Gew. % Cumolhydroperoxid.

Es entstand eine Masse, die auf einen vorgereinigten Untergrund aufgetragen werden konnte. Die Schichtdicke betrug ca. 0,8 mm. Das Produkt war ca. 30 min verarbeitbar, nach 24 h war die Oberfläche klebfrei. Die volle Belastbarkeit erreichte die Beschichtung nach 5 Tagen. Sie war resistent gegenüber Säuren und Laugen.

### Beispiel 2

Es wurde wie im Beispiel 1 vorgegangen, aber es wurde als Füllstoff nach Zugabe des Starters unter erneuter Homogenisierung 16 kg Quarzfüllstoff Millisil W4 (Quarzwerke) unter Rühren hinzugefügt und gut vermischt. Es entstand eine Masse, die auf einen vorgereinigten Untergrund aufgetragen werden konnte.

Die Schichtdicke betrug ca. 2 mm. Das Produkt war ca. 30 min verarbeitbar, nach 24 h war die Oberfläche klebfrei.

Das Produkt wies gegenüber Beispiel 1 verminderte Schrumpfspannungen auf.

### Beispiel 3

Es wurde wie im Beispiel 2 vorgegangen, aber an Stelle des Quarzfüllstoffes wurden 2 Wirrfasermatten mit einem Flächengewicht von jeweils 300 g/m² in die Harzmatrix samt Starter eingebettet. Der Glasanteil der Gesamtmasse betrug 30 %. Nach dem Aushärten wurde eine Beschichtung erhalten, die höhere mechanische Stabilität aufweist.

## Patentansprüche

1. Bindemittelzusammensetzung enthaltend
- 50 bis 70 Gew.-% eines Acrylatesters eines Epoxy-Novolac-Harzes
- 30 bis 49 Gew.-% mono-, di- oder trifunktionelle Acrylate
- 0,1 bis 2 Gew.-% Starter
- 0 bis 10 Gew.-% weitere Hilfsstoffe,
wobei die Bindemittelzusammensetzung im Wesentlichen keine Bestandteile aufweist, die einen Siedepunkt unter 200 °C bei Normaldruck haben.

2. Bindemittelzusammensetzung nach Anspruch 1, wobei der Acrylatester eines Epoxy-Novolac-Harzes ein Triacrylatester ist

3. Bindemittelzusammensetzung nach einem der Ansprüche 1 bis 2, wobei die mono-, di- oder trifunktionellen Acrylate ausgewählt werden aus 1,4-Butandioldimethacrylat, 1,6-Hexandioldimethacrylat, Tripropylenglycoldiacrylat, Glyceroldimethacrylat, 1,4-Butandioldiacrylat, 1,6-Hexandioldiacrylat, Polyethylenglycol 200 dimethacrylat, Butyldiglycolmethacrylat, Dicylopentenyloxyethylmethacrylat, Dihydroxycyclopentadienylacrylat, Tetrahydrofurfurylmethacrylat, Ethyltriglycolmethacrylat, Trimethylolpropantrimethacrylat und Mischungen hiervon.

4. Bindemittelzusammensetzung nach einem der Ansprüche 1 bis 3, wobei der Starter ein azo- oder peroxidbasierter Starter ist.

5. Bindemittelzusammensetzung nach einem der Ansprüche 1 bis 4, wobei die Hilfsstoffe ausgewählt werden aus Beschleuniger, Verzögerer, Viskositätsmodifikatoren Haftverbesserer, oder Mischungen davon.

6. Bindemittelzusammensetzung nach einem der Ansprüche 1 bis 5, wobei der Gehalt an Monostyrol ≤ 0.05 Gew.-% ist.

7. Beschichtungszusammensetzung enthaltend 30 - 70 Gew.-% Bindemittelzusammensetzung nach einem der Ansprüche 1 bis 6 und 70 - 30 Gew.-% Füllstoffe.

8. Beschichtungszusammensetzung nach Anspruch 7, wobei die Füllstoffe ausgewählt werden aus Glasfasern, Glasgewebe, Kohlenstofffasern, Kohlenstoffgewebe sowie Vliesen, Glasflakes, Glimmer, Graphitflakes, Pigmenten, Schwerspat, Quarzen, Kieselsäuren, Koksen, Rußen, Graphit, Siliziumcarbid, Tonerde und Mischungen davon.

9. Formkörper erhältlich durch Aushärtung der Bindemittelzusammensetzung nach einem der Ansprüche 1 bis 6 oder der Beschichtungszusammensetzung nach Anspruch 7 oder 8.

10. Formkörper nach Anspruch 9, wobei der Formkörper ein Bauteil oder eine Beschichtung ist.

11. Verwendung der Bindemittelzusammensetzung nach einem der Ansprüche 1 bis 6 oder Beschichtungszusammensetzung nach Anspruch 7 oder 8 als Schutzschicht auf Substraten wie Stahlbeton oder Stahl, als Verlaufs-, Spachtel- oder Einstreubeschichtung, als Kunstharzkitt zum Verlegen und Verfugen von Plattierungen oder Ausmauerungen, als Behälterinnenbeschichtungen oder als Kunstharzmassen zur Herstellung von Polybetonen.

12. Verfahren zur Beschichtung eines Substrats umfassend die Schritte
- Aufbringen der Bindemittelzusammensetzung nach einem der Ansprüche 1 bis 6 oder der Beschichtungszusammensetzung nach Anspruch 7 oder 8, um eine Beschichtungsschicht zu erhalten
- Aushärten der Beschichtungsschicht.

13. Verfahren nach Anspruch 12 wobei das Aufbringen durch Laminier-, Tauch-, Tränk-, Spachtel, Spritz- oder Rollverfahren erfolgt.

## Claims

1. A binder composition comprising
- 50 to 70% by weight of an acrylate ester of an epoxy-novolac resin,
- 30 to 49% by weight of mono-, di- or trifunctional acrylates,
- 0.1 to 2% by weight of a starter,
- 0 to 10% by weight of other auxiliaries,
wherein said binder composition essentially has no components that have a boiling point below 200°C under normal pressure.

2. The binder composition according to claim 1, wherein said acrylate ester of an epoxy-novolac resin is a triacrylate ester.

3. The binder composition according to either of claims 1 to 2, wherein said mono-, di- or trifunctional acrylates are selected from 1,4-butanediol dimethacrylate, 1,6-hexanediol dimethacrylate, tripropylene glycol diacrylate, glycerol dimethacrylate, 1,4-butanediol diacrylate, 1,6-hexanediol diacrylate, polyethylene glycol 200 dimethacrylate, butyldiglycol methacrylate, dicylopentenyloxyethyl methacrylate, dihydroxycyclopentadienyl acrylate, tetrahydrofurfuryl methacrylate, ethyltriglycol methacrylate, trimethylolpropane trimethacrylate, and mixtures thereof.

4. The binder composition according to any of claims 1 to 3, wherein said starter is an azo-based or peroxide-based starter.

5. The binder composition according to any of claims 1 to 4, wherein said auxiliaries are selected from accelerators, decelerators, viscosity modifiers, adhesion promoters, or mixtures thereof.

6. The binder composition according to any of claims 1 to 5, wherein the content of monostyrene is ≤ 0.05% by weight.

7. A coating composition comprising from 30 to 70% by weight of the binder composition according to any of claims 1 to 6, and 70 to 30% by weight of fillers.

8. The coating composition according to claim 7, wherein said fillers are selected from glass fibers, glass fabric, carbon fibers, carbon fabric, and non-wovens, glass flakes, mica, graphite flakes, pigments, baryte, quartzes, silicas, cokes, carbon blacks, graphite, silicon carbide, alumina and mixtures thereof.

9. A molded part obtainable by curing the binder composition according to any of claims 1 to 6 or the coating composition according to claim 7 or 8.

10. The molded part according to claim 9, wherein said molded part is a component or a coating.

11. Use of the binder composition according to any of claims 1 to 6 or of the coating composition according to claim 7 or 8 as a protective layer on substrates such as steel-reinforced concrete or steel, as a leveling, trowel-applied or blinded coating, as a synthetic resin putty for laying and grouting tiles or masonry, as container interior coatings or as synthetic resin compositions for preparing polyconcretes.

12. A process for coating a substrate comprising the steps of
- applying the binder composition according to any of claims 1 to 6 or the coating composition according to claim 7 or 8, to obtain a coating layer,
- curing said coating layer.

13. The process according to claim 12, wherein said applying is effected by laminating, dipping, soaking, trowel-applying, jet-spraying or rolling methods.

## Revendications

1. Composition de liant contenant
- 50 à 70 % en poids d'un ester d'acrylate d'une résine époxy-novolaque
- 30 à 49 % en poids d'acrylates monofonctionnels, difonctionnels ou trifonctionnels
- 0,1 à 2 % en poids d'amorceur
- 0 à 10 % en poids d'autres adjuvants,
dans laquelle la composition de liant ne présente sensiblement aucun composant ayant un point d'ébullition inférieur à 200 °C à pression normale.

2. Composition de liant selon la revendication 1, dans laquelle l'ester d'acrylate d'une résine époxy-novolaque est un ester de triacrylate.

3. Composition de liant selon l'une des revendications 1 à 2, dans laquelle les acrylates monofonctionnels, difonctionnels ou trifonctionnels sont choisis parmi le diméthacrylate de 1,4-butanediol, le diméthacrylate de 1,6-hexanediol, le diacrylate de tripropylèneglycol, diméthacrylate de glycérol, le diacrylate de 1,4-butanediol, le diacrylate de 1,6-hexanediol, le diméthacrylate de polyéthylèneglycol 200, le méthacrylate de butyldiglycol, le méthacrylate de dicylopentényloxyéthyle, le acrylate de dihydroxycyclopentadiényle, le méthacrylate de tétrahydrofurfuryle, le méthacrylate d'éthyltriglycol, le triméthacrylate de triméthylolpropane et leurs mélanges.

4. Composition de liant selon l'une des revendications 1 à 3, dans laquelle l'amorceur est un amorceur à base d'azoïque ou de peroxyde.

5. Composition de liant selon l'une des revendications 1 à 4, dans laquelle les adjuvants sont choisis parmi les accélérateurs, les retardateurs, les modificateurs de viscosité, les promoteurs d'adhérence, ou leurs mélanges.

6. Composition de liant selon l'une des revendications 1 à 5, dans laquelle la teneur en monostyrène est ≤ 0,05 % en poids.

7. Composition de revêtement contenant 30 à 70 % en poids de composition de liant selon l'une des revendications 1 à 6 et 70 à 30 % en poids de charges.

8. Composition de revêtement selon la revendication 7, dans laquelle les charges sont choisies parmi les fibres de verre, les tissus de verre, les fibres de carbone, les tissus de carbone ainsi que les non-tissés, les flocons de verre, le mica, les flocons de graphite, les pigments, le barytine, le quartz, les acides siliciques, les cokes, les noirs de carbone, le graphite, le carbure de silicium, l'alumine et leurs mélanges.

9. Corps moulé pouvant être obtenu par durcissement de la composition de liant selon l'une des revendications 1 à 6 ou de la composition de revêtement selon la revendication 7 ou 8.

10. Corps moulé selon la revendication 9, dans lequel le corps moulé est un composant ou un revêtement.

11. Utilisation de la composition de liant selon l'une des revendications 1 à 6 ou de la composition de revêtement selon la revendication 7 ou 8 comme couche de protection sur des substrats tels que le béton armé ou l'acier, comme revêtement d'étalement, d'enduction à la spatule ou de saupoudrage, comme mastic de résine synthétique pour la pose et le jointoiement de placages ou de garnissages, comme revêtements intérieurs de récipients ou comme matières de résine synthétique pour la fabrication de polybétons.

12. Procédé pour le revêtement d'un substrat comprenant les étapes consistant à
- appliquer la composition de liant selon l'une des revendications 1 à 6 ou la composition de revêtement selon la revendication 7 ou 8 pour obtenir une couche de revêtement,
- durcir la couche de revêtement.

13. Procédé selon la revendication 12 dans lequel l'application est réalisée par laminage, trempage, imprégnation, enduction à la spatule, pulvérisation ou enduction au rouleau.
